(19) Europäisches Patentamt
European Patent Office
Office européen des brevets

(11) EP 1 952 689 A1

(12) # EUROPEAN PATENT APPLICATION
published in accordance with Art. 158(3) EPC

(43) Date of publication:
**06.08.2008 Bulletin 2008/32**

(21) Application number: **06832903.6**

(22) Date of filing: **17.11.2006**

(51) Int Cl.:
***A01N 43/56*** *(2006.01)* ***A01N 37/44*** *(2006.01)*
***A01N 43/84*** *(2006.01)* ***A01P 3/00*** *(2006.01)*

(86) International application number:
**PCT/JP2006/323025**

(87) International publication number:
**WO 2007/060896 (31.05.2007 Gazette 2007/22)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.11.2005 JP 2005336705**

(71) Applicant: **ISHIHARA SANGYO KAISHA, LTD.**
**Osaka-shi,**
**Osaka 550-0002 (JP)**

(72) Inventors:
- **MITANI, Shigeru**
  **Kusatsu-shi**
  **Shiga 525-0025 (JP)**
- **YAMAGUCHI, Tomona**
  **Kusatsu-shi**
  **Shiga 525-0025 (JP)**
- **TAKII, Yasuko**
  **Kusatsu-shi**
  **Shiga 525-0025 (JP)**

(74) Representative: **Hartz, Nikolai et al**
**Wächtershauser & Hartz**
**Weinstrasse 8**
**80333 München (DE)**

(54) **GERMICIDE COMPOSITION FOR AGRICULTURAL AND GARDENING APPLICATIONS AND METHOD FOR CONTROLLING PLANT DISEASE**

(57) It is to provide a composition having stable and high fungicidal effects against cultivated crops infected with plant diseases.

A fungicidal composition for agricultural or horticultural use comprising, as active ingredients, (a) at least one imidazole compound represented by the formula (I):

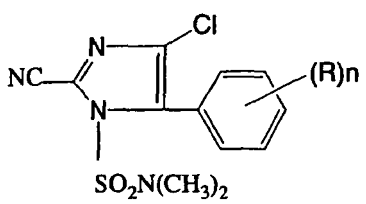

(wherein R is a $C_{1-6}$ alkyl group or a $C_{1-6}$ alkoxy group, and n is an integer of from 1 to 5) and (b) at least one more fungicide selected from the group consisting of Flumorph and Benalaxyl-M.



Printed by Jouve, 75001 PARIS (FR)

## Description

TECHNICAL FIELD

The present invention relates to a fungicidal composition for agricultural or horticultural use having effects for controlling plant diseases, particularly preventive and/or curative effects against plant diseases remarkably improved, and a method for controlling plant diseases by using such a composition.

BACKGROUND ART

Patent Document 1 discloses, as a fungicide, an imidazole compound, which is the active ingredient of the fungicidal composition for agricultural or horticultural use in the present invention and may be used in combination with another fungicide as the case requires. Further, flumorph is a compound disclosed in Patent document 2, Table 3, as Ex. No. 3.01. However, in these documents, the combination of active ingredients of the fungicidal composition for agricultural or horticultural use in the present invention is not disclosed.

Patent Document 1: European Patent Publication No. 298196

Patent Document 2: US Patent Publication No. 6020332

DISCLOSURE OF THE INVENTION

PROBLEMS TO BE SOLVED BY THE INVENTION

The imidazole compound represented by the formula

(I) given hereinafter, may have an inadequate controlling effect against a specific plant disease, or its residual effect may last only a relatively short time, and it has only an inadequate controlling effect against plant diseases practically depending upon the application site.

MEANS OF SOLVING THE PROBLEMS

The present inventors have conducted a research to solve the above problems and as a result, found that when an imidazole compound represented by the formula (I) given hereinafter and at least one more fungicide selected from the group consisting of Flumorph and Benalaxyl-M are used in combination, an unexpectedly excellent effect for controlling plant diseases can be obtained as compared with a case where the respective compounds are used alone. Thus, the present invention has been accomplished.
Namely, the present invention relates to a fungicidal composition for agricultural or horticultural use containing as active ingredients (a) at least one imidazole compound represented by the formula (I):

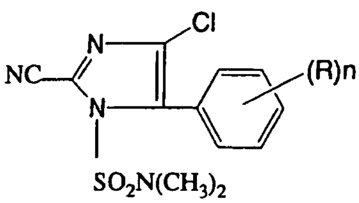

(wherein R is a $C_{1-6}$ alkyl group or a $C_{1-6}$ alkoxy group, and n is an integer of from 1 to 5) and (b) at least one more fungicide selected from the group consisting of Flumorph and Benalaxyl-M. Further, the present invention relates to a method for controlling plant diseases, which comprises applying the above fungicidal composition for agricultural or horticultural use to plants.

EFFECTS OF THE IVNENTION

The fungicidal composition for agricultural or horticultural use of the present invention has stable and high fungicidal effects against cultivated crops infected with plant diseases, and it is possible to control the plant diseases by

this composition.

BEST MODE FOR CARRYING OUT THE INVENTION

The alkyl moiety of the $C_{1-6}$ alkyl group or the $C_{1-6}$ alkoxy group defined as R in the imidazole compound of the formula (I) may, for example, be $C_{1-6}$ alkyl such as methyl, ethyl, propyl, butyl, pentyl or hexyl. Such alkyl may be linear or branched.
Further, n in the formula (I) is an integer of from 1 to 5. Further, in a case where n is at least 2, a plurality of R may be the same or different.
For example, the following compounds are included in the imidazole compound of the formula (I).

(1) 4-chloro-2-cyano-1-dimethylsulfamoyl-5-(4-methylphenyl) imidazole (Compound No.1)
(2) 4-chloro-2-cyano-1-dimethylsulfamoyl-5-(4-methoxylphenyl) imidazole (Compound No. 2)
(3) 4-chloro-2-cyano-1-dimethylsulfamoyl-5-(4-ethylphenyl) imidazole (Compound No. 3)
(4) 4-chloro-2-cyano-1-dimethylsulfamoyl-5-(3-methyl-4-methoxyphenyl) imidazole (Compound No. 4)

Further, the imidazole compound of the formula (I) can be produced by the methods described in European Patent Publication No. 298196, European Patent Publication No. 705823, etc.
Flumorph used as the active ingredient (b) in the present invention is a compound described in "The Pesticide Manual" (the 13th edition; BRITISH CROP PROTECTION COUNCIL), pages 462 to 463. Benalaxyl-M (another name: Kiralaxyl, Chiralaxyl) is a compound described in "AG CHEM NEW COMPOUND REVIEW VOLUME 22" (2004), page 61 and "Shibuya Index" (2005), page 116.
The fungicidal composition for agricultural or horticultural use comprising, as active ingredients, (a) at least one imidazole compound of the formula (I) and (b) at least one more fungicide selected from the group consisting of Flumorph and Benalaxyl-M exhibits excellent fungicidal activities when applied to crop plants e.g. vegetables such as cucumbers, tomatoes or eggplants, cereal crops such as rice or wheat, beans, fruits such as apples, pears, grapes or oranges, or potatoes, which are infected or likely to be infected with pathogenic fungi, and it is suitable for controlling diseases such as powdery mildew, downy mildew, anthracnose, gray mold, green mold, scab, Alternaria leaf spot, bacterial blight, leaf blight, pod and stem blight, ripe rot, late blight, ring leaf-spot, blast, sheath blight, damping-off and southern blight. Further, it exhibits excellent controlling effects also against soil-borne diseases caused by phytopathogenic fungi such as Fusarium, Rhizoctonia, Verticillium, Plasmodiophora and Pythium.
The fungicidal composition for agricultural or horticultural use of the present invention has a long residual effect and is excellent in penetration transfer, and thus, it has a preventive effect and/or a curative effect, but it is excellent particularly in the preventive effect.
The fungicidal composition for agricultural or horticultural use of the present invention exhibits excellent controlling effects against diseases, specifically against blast of rice; sheath blight of rice; anthracnose of cucumber; downy mildew of cucumber, melon, cabbage, chinese cabbage, onion, pumpkin or grape; powdery mildew of wheat, barley or cucumber; late blight of potato, red pepper, green pepper, watermelon, pumpkin, tobacco or tomato; speckled leaf blotch of wheat; early blight of tomato; melanose of citrus; common green mold of citrus; scab of pear; Antenaria leaf spot of apple; Shiroiro-eki-byo of onion; brown rot of watermelon; various diseases such as various gray mold, Sclerotinia rot, rust and bacterial blight; various soil-born diseases caused by phytopathogenic fungi such as Fusarium, Pythium, Rhizoctonia and Verticillium. Further, it exhibits excellent controlling effects also against diseases by Plasmodiophora.
The composition further exhibits particularly excellent controlling effects specifically against late blight of potato, red pepper, green pepper, watermelon, pumpkin, tobacco, tomato, eggplant, strawberry or fig; or downy mildew of cucumber, melon, cabbage, chinese cabbage, onion, pumpkin, grape, lettuce, spinach, sunflower or hop.
The plural active ingredients constituting the fungicidal composition for agricultural or horticultural use in the present invention may be blended with various adjuvants to prepare various formulations such as an emulsifiable concentrate, a dust, a wettable powder, an aqueous solution, granules and a suspension, in the same manner as for conventional agricultural formulations. At that time, the compound of the formula (I) and other specific compounds may be mixed and formulated together, or may separately be formulated and then mixed. When such a formulated product is to be practically used, it may be used as it is or after being diluted to a predetermined concentration with a diluting agent such as water. The adjuvants here may, for example, be a carrier, an emulsifier, a suspension agent, a thickener, a stabilizer, a dispersant, a spreading agent, a wetting agent, a penetrating agent, an antifreezer and a defoaming agent, and they may be added as the case requires. The carrier may be divided into a solid carrier and a liquid carrier.
The solid carrier may, for example, be an animal or plant powder such as starch, sugar, cellulose powder, cyclodextrin, activated carbon, soybean powder, wheat powder, chaff powder, wood powder, fish powder or dry milk; or a mineral powder such as talc, kaolin, bentonite, organic bentonite, calcium carbonate, calcium sulfate, sodium hydrogencarbonate, zeolite, diatomaceous earth, white carbon, clay, alumina, silica, sulfur powder or slaked lime.

The liquid carrier may, for example, be water; a vegetable oil such as soybean oil or cotton oil; an animal oil such as beef tallow or whale oil; an alcohol such as ethyl alcohol or ethylene glycol; a ketone such as acetone, methyl ethyl ketone, methyl isobutyl ketone or isophorone; an ether such as dioxane or tetrahydrofuran; an aliphatic hydrocarbon such as kerosene, lamp oil or liquid paraffin; an aromatic hydrocarbon such as toluene, xylene, trimethylbenzene, tetramethylbenzene, cyclohexane or solvent naphtha; a halogenated hydrocarbon such as chloroform or chlorobenzene; an acid amide such as N,N-dimethylformamide or N,N-dimethylacetamide; an ester such as ethyl acetate or a glycerin ester of a fatty acid; a nitrile such as acetonitrile; a sulfur-containing compound such as dimethylsulfoxide; or N-methyl-2-pyrrolidone.

The spreading agent may, for example, be sodium alkylsulfate, sodium alkylbenzenesulfonate, sodium lignin sulfonate, polyethylene glycol alkyl ether, polyoxyethylene lauryl ether, polyoxyethylene alkyl aryl ether or polyoxyethylene sorbitan fatty acid ester.

Further, in the present invention, another pesticide such as a fungicide, an insecticide, a miticide, a nematicide, a soil pesticide, an antivirus agent, an attractant, a herbicide and a plant growth regulating agent may be further incorporated. In such a case, more excellent effects can be obtained.

The active ingredient compound (common name; including some which are under application or Japan Plant Protection Association test specimen code. "under application" means under application for international standard name of pestcides) of the fungicide in such another agricultural chemical, may, for example, be:

a pirimidinamine compound such as Mepanipyrim, Pyrimethanil or Cyprodinil;
a piridinamine compound such as Fluazinam;
an azole compound such as Triadimefon, Bitertanol, Triflumizole, Etaconazole, Propiconazole, Penconazole, Flusilazole, Myclobutanil, Cyproconazole, Tebuconazole, Hexaconazole, Furconazole-cis, Prochloraz, Metconazole, Epoxiconazole, Tetraconazole, Oxpoconazole fumarate, Sipconazole, Prothioconazole, Triadimenol, Flutriafol, Difenoconazole, Fluquinconazole, Fenbuconazole, Bromuconazole, Diniconazole, Pefurazoate, Ipconazole or Simeconazole;
a quinoxaline compound such as Quinomethionate;
a dithiocabamate compound such as Maneb, Zineb, Mancozeb, Polycarbamate, Metiram, Propineb or Thiram;
an organic chlorine compound such as Fthalide, Chlorothalonil or Quintozene (PCNB);
an imidazole compound such as Benomyl, Thiophanate-Methyl, Carbendazim, Thiabendazole or Fuberiazole;
a cyano acetamide compound such as Cymoxanil;
a phenylamide compound such as Metalaxyl, Metalaxyl-M (Mefenoxam), Oxadixyl, Ofurace, Benalaxyl, Furalaxyl or Cyprofuram;
a sulfenic acid compound such as Dichlofluanid;
a copper compound such as Cuprichydroxide or Oxine Copper;
an isoxazole compound such as Hymexazol;
an organic phosphorus compound such as Fosetyl-Al, Tolcofos-Methyl, S-benzyl O,O-diisopropylphosphorothioate, O-ethyl S,S-diphenylphosphorodithioate or aluminum ethylhydrogen phosphonate;
an N-halogenothioalkyl compound such a Captan, Captafol or Folpet;
a dicarboxyimide compound such as Procymidone, Iprodione or Vinclozolin;
a benzanilide compound such as Flutolanil, Mepronil, Zoxamid or Tiadinil;
an anilide compound such as Carboxin, Oxycarboxin, Thifluzamide, MTF-753 (Penthiopyrad) or Boscalid
a piperazine compound such as Triforine;
a pyridine compound such as Pyrifenox;
a carbinol compound such as Fenarimol or Flutriafol;
a piperidine compound such as Fenpropidine;
a morpholine compound such as Fenpropimorph or Tridemorph;
an organic tin compound such as Fentin Hydroxide or Fentin Acetate;
a urea compound such as Pencycuron;
a cinnamic acid compound such as Dimethomorph;
a phenylcarbamate compound such as Diethofencarb;
a cyanopyrrole compound such as Fludioxonil or Fenpiclonil;
a strobilurin compound such as Azoxystrobin, Kresoxim-Methyl, Metominofen, Trifloxystrobin, Picoxystrobin, Oryzastrobin, Dimoxystrobin, Pyraclostrobin, Fluoxastrobin or Fluacrtpyrin;
an oxazolidinone compound such as Famoxadone;
a thiazolecarboxamide compound such as Ethaboxam;
a silylamide compound such as Silthiopham;
an amino acid amide carbamate compound such as Iprovalicarb or Benthiavalicarb-isopropyl;
an imidazolidine compound such as Fenamidone;

a hydroxyanilide compound such as Fenhexamide;
a benzenesulfonamide compound such as Flusulfamide;
an oxime ether compound such as Cyflufenamide;
a phenoxyamide compound such as Fenoxanil;
an antibiotic such as Validamycin, Kasugamycin or Polyoxins;
a guanidine compound such as Iminoctadine; or
a pyridadinone compound such as Diclomezine.

Further, isoprothiolane, Tricyclazole, Pyroquilon, Diclomezine, Probenazole, Quinoxyfen, Propamocarb Hydrochloride, Spiroxamine, Chloropicrin, Dazomet, Metam-sodium, Metrafenone, UBF-307, Diclocymet, Proquinazid, Amisulbrom (another name: Amibromdole) KIF-7767 (KUF-1204, Pyribencarb methyl, mepyricarb), Syngenta 446510 (Mandipropamid, dipromandamid) and Fluopicolide may, for example, be mentioned.

The active ingredient compound (common name; including some which are under application) of the insecticide, miticide, nematicide or a soil pesticide i.e. the pesticide of such another agricultural chemical, may, for example, be an organic phosphate compound such as Profenofos, Dichlorvos, Fenamiphos, Fenitrothion, EPN, Diazinon, Chlorpyrifos-methyl, Acephate, Prothiofos, Fosthiazate, Phosphocarb, Cadusafos, Dislufoton, Chlorpyrifos, Demeton-S-methyl, Dimethoate, Methamidophos or Imicyafos;
a carbamate compound such as Carbaryl, Propoxur, Aldicarb, Carbofuran, Thiodicarb, Methomyl, Oxamyl, Ethiofencarb, Pirimicarb, Fenobucarb, Carbosulfan or Benfuracarb;
a nelicetoxin derivative such as Cartap, Thiocyclam or Bensultap;
an organic chlorine compound such as Dicofol, Tetradifon or Endosulfan;
an organic metal compound such as Fenbutatin Oxide;
a pyrethroid compound such as Fenvalerate, Permethrin, Cypermethrin, Deltamethrin, Cyhalothrin, Tefluthrin, Ethofenprox, Fenpropathrin or Bifenthrin;
a benzoyl urea compound such as Diflubenzuron, Chlorfluazuron, Teflubenzuron, Flufenoxuron, Lufenuron or Novaluron;
a juvenile hormone-like compound such as Methoprene, Pyriproxyfen or Fenoxycarb;
a pyridazinone compound such as Pyridaben;
a pyrazole compound such as Fenpyroximate, Fipronil, Tebufenpyrad, Ethiprole, Tolefenpyrad, Acetoprole, Pyrafluprole or Pyriprole;
a neonicotinoide such as Imidacloprid, Nitenpyram, Acetamiprid, Thiacloprid, Thiamethoxam, Clothianidin, Dinotefuran; or
a hydrazine compound such as Tebufenozide, Methoxyfenozide, Chromafenozide or Halofenozide.

Further, a dinitro compound, an organosulfur compound, an urea compound, a triazine compound or a hydrazone compound; and
other compound, such as Flonicamid, Buprofezin, Hexythiazox, Amitraz, Chlordimeform, Silafluofen, Triazamate, Pymetrozine, Pyrimidifen, Chlorfenapyr, Indoxacarb, Acequinocyl, Etoxazole, Cyromazine, 1,3-dichloropropene, Diafenthiuron, Benclothiaz, Flufenerim, Pyridalyl, Spirodiclofen, Bifenazate, Spiromesifen, spirotetramat, Propargite, Clofentezine, Fluacrypyrim, Metaflumizone, Flubendiamide, Cyflumetofen, DPX-E2Y45 (Chlorantraniliprole), Cyenopyrafen, NNI-0101 (Pyrifluquinazon) or Fenazaquin may, for example, be mentioned.

Further, a microbial pesticide such as a BT agent, an insect pathogenic virus agent, an entomopathogenic fungi agent or a nematophagous fungi agent;
an antibiotic such as Avermectin, Emamectin-Benzoate, Milbemectin, Spinosad, Ivermectin or Lepimectin; and
a natural product such as Azadirachtin or Rotenone may, for example, be mentioned.

In the fungicidal composition for agricultural or horticultural use of the present invention, the mixing weight ratio (a:b) of (a) at least one compound of the formula (I) to (b) the fungicide is from 1:150,000 to 1,000:1, preferably from 1: 10,000 to 1,000:1, more preferably from 1:200 to 200:1. The most preferred mixing weight ratio is from 1:150 to 20:1.

The present invention also includes a method for controlling plant diseases, which comprises applying the fungicidal composition for agricultural or horticultural use of the present invention to plants. The concentrations of the active ingredients in the fungicidal composition for agricultural or horticultural use of the present invention vary depending upon the crop plant to be treated, the method to be used, the formulation, the dose, the season for application, the type of pathogenic fungi and cannot generally be defined. However, in the case of foliar treatment, the concentrations of the active ingredients are such that usually, the compound (a) of the above formula (I) is from 0.01 to 1,000 ppm, preferably from 0.3 to 500 ppm, and the fungicide (b) is from 0.1 to 10,000 ppm, preferably from 0.5 to 5,000 ppm.

Now, some preferred embodiments of the fungicidal composition for agricultural or horticultural use of the present invention will be exemplified. However, the present invention is by no means thereby restricted.

(1) A fungicidal composition for agricultural or horticultural use, which comprises (a) at least one compound of the formula (I) and (b) at least one more fungicide selected from the group consisting of Flumorph and Benalaxyl-M, as

active ingredients.

(2) The fungicidal composition for agricultural or horticultural use according to (1), wherein the weight ratio of (a) at least one compound of the formula (I) to (b) at least one more fungicide selected from the group consisting of Flumorph and Benalaxyl-M is from 1:15,0000 to 1,000:1.

(3) The fungicidal composition for agricultural or horticultural use according to (1), wherein the weight ratio of (a) at least one compound of the formula (I) to (b) at least one more fungicide selected from the group consisting of Flumorph and Benalaxyl-M is from 1:10,000 to 1,000:1.

(4) The fungicidal composition for agricultural or horticultural use according to (1), wherein the weight ratio of (a) at least one compound of the formula (I) to (b) at least one more fungicide selected from the group consisting of Flumorph and Benalaxyl-M is from 1:200 to 200:1.

(5) The fungicidal composition for agricultural or horticultural use according to (1), wherein the weight ratio of (a) at least one compound of the formula (I) to (b) at least one more fungicide selected from the group consisting of Flumorph and Benalaxyl-M is from 1:150 to 20:1.

## EXAMPLES

Now, Test Examples relating to the present invention will be described, but the present invention is by no means thereby restricted.

## TEST EXAMPLE 1

Test on Preventive Effect Against Cucumber Downy Mildew

Cucumber (cultivar: Sagamihanshirofushinari) was cultivated in a polyethylene pot having a diameter of 7.5 cm, and when the cucumber reached two-leaf stage, a drug solution having the respective test compounds adjusted to the predetermined concentrations (applied amount: 1000L/ha), was applied by means of a spray gun. After the applied solution dried, the cucumber was sprayed and inoculated with a suspension of spores of cucumber downy mildew and kept in a humidified chamber at 20°C for 20 hours. Thereafter, the cucumber was kept in a thermostatic chamber at 20°C for 7 days, whereupon the lesion area rate was obtained. The results are shown in Tables 1 and 2. Here, the lesion area rate is a value obtained in such a manner that lesion area of Downy Mildew of specimen leaves was obtained by visual examination, and its ratio to the total area of specimen leaves is shown by percent.

The lesion area ratio in non-treated area was obtained in the same manner as in the treated area except that instead of the drug solution, water was applied by means of a spray gun.

Further, a theoretical value can be calculated by the Colby formula. If the experimental value is lower than the theoretical value by the Colby formula, the fungicidal composition for agricultural or horticultural use of the present invention has a synergistic effect for controlling the plant disease. In this context, the theoretical values by the Colby formula are also shown in brackets ( ) in Tables 1 and 2.

TABLE 1

| Benalaxyl-M \ Compound No. 1 | Lesion area ratio in the test on preventive effect against cucumber downy mildew (%) (theoretical value) | |
|---|---|---|
| | 0.2 ppm | 0 ppm |
| 25 ppm | 0 (10) | 100 |
| 0 ppm | 10 | 100 |

TABLE 2

| Flumorph \ Compound No. 1 | Lesion area ratio in the test on preventive effect against cucumber downy mildew (%) (theoretical value) | |
|---|---|---|
| | 0.2 ppm | 0 ppm |
| 12.5 ppm | 0 (2) | 20 |
| 0 ppm | 10 | 100 |

TEST EXAMPLE 2

Test on Curative Effect Against Cucumber Downy Mildew

Cucumber (cultivar: Sagamihanshirofushinari) was cultivated in a polyethylene pot having a diameter of 7.5 cm, and when it reached two-leaf stage, the cucumber was sprayed and inoculated with a suspension of spores of cucumber downy mildew and kept in a humidified chamber at 20°C for 20 hours. Then, after drying the crop plant, a drug solution having the respective test compounds adjusted to the predetermined concentrations, was applied in a sufficient amount (20 ml) by means of a spray gun. After the sprayed solution dried, it was kept in a thermostatic chamber at 20°C for 5 days, whereupon the lesion area ratio was obtained. The results are shown in Tables 3 and 4.

The lesion area ratio in non-treated area was obtained in the same manner as in the treated area except that instead of the drug solution, water was applied by means of a spray gun.

Further, a theoretical value can be calculated by the Colby formula. If the experimental value is lower than the theoretical value by the Colby formula, the fungicidal composition for agricultural or horticultural use of the present invention has a synergistic effect for controlling the plant disease. In this context, the theoretical values by the Colby formula are also shown in brackets ( ) in Tables 3 and 4.

TABLE 3

| Benalaxyl-M \ Compound No. 1 | Lesion area ratio in the test on curative effect against cucumber downy mildew (%) (theoretical value) | | |
|---|---|---|---|
| | 200 ppm | 50 ppm | 0 ppm |
| 400 ppm | 10 (100) | 10 (100) | 100 |
| 0 ppm | 100 | 100 | 100 |

TABLE 4

| Flumorph \ Compound No. 1 | Lesion area ratio in the test on curative effect against cucumber downy mildew (%) (theoretical value) | | |
|---|---|---|---|
| | 200 ppm | 50 ppm | 0 ppm |
| 400 ppm | 5 (90) | 5 (90) | 90 |
| 0 ppm | 100 | 100 | 100 |

TEST EXAMPLE 3

Test on Preventive Effect Against Tomato Late Blight

Tomato (cultivar: Ponderosa) was cultivated in a polyethylene pot having a diameter of 7.5 cm, and when it reached four-leaf stage, a drug solution having the respective test compounds adjusted to the predetermined concentrations, was applied (applied amount: 1000L/ha) by means of a spray gun. After the applied solution dried, the tomato was sprayed and inoculated with a zoosporangia suspension of tomato late blight and kept in a humidified chamber at 20°C for 6 hours. Then, it was kept in a thermostatic chamber at 20°C for 3 days. Then, the disease severity index of each leaf was investigated by the following standards, and the disease severity was obtained by the following formula. The results are shown in Tables 5 and 6.

The disease severity in non-treated area was obtained in the same manner as in the treated area except that instead of the drug solution, water was applied by means of a spray gun.

Disease severity index 0: No lesion is observed.
Disease severity index 1: The lesion area is less than 10% of the leaf area.
Disease severity index 2: The lesion area is from 10% to less than 25% of the leaf area.
Disease severity index 3: The lesion area is from 25% to less than 50% of the leaf area.
Disease severity index 4: The lesion area is at least 50% of the leaf area.

$$\text{Disease severity} = [(0\times A+1\times B+2\times C+3\times D+4\times E)/\{4\times(A+B+C+D+E)\}]\times 100$$

where A is the number of leaves with disease severity index 0, B is the number of leaves with disease severity index 1, C is the number of leaves with disease severity index 2, D is the number of leaves with disease severity index 3, and E is the number of leaves with disease severity index 4.

Further, a theoretical value can be calculated by the Colby formula. If the experimental value is lower than the theoretical value by the Colby formula, the fungicidal composition for agricultural or horticultural use of the present invention has a synergistic effect for controlling the plant disease. In such a context, the theoretical values by the Colby formula are also shown in brackets ( ) in Tables 5 and 6.

TABLE 5

| Benalaxyl-M \ Compound No. 1 | Disease severity in the test on preventive effect against tomato late blight (theoretical value) | | |
|---|---|---|---|
| | 6.3 ppm | 1.6 ppm | 0 ppm |
| 100 ppm | 0 (12) | 0 (19) | 100 |
| 25 ppm | 0 (12) | 6 (19) | 100 |
| 0 ppm | 12 | 19 | 100 |

TABLE 6

| Flumorph \ Compound No. 1 | Disease severity in the test on preventive effect against tomato late blight (theoretical value) | | |
|---|---|---|---|
| | 6.3 ppm | 1.6 ppm | 0 ppm |
| 12.5 ppm | 0 (12) | 0 (19) | 100 |
| 6.3 ppm | 0 (12) | 19 (19) | 100 |
| 0 ppm | 12 | 19 | 100 |

TEST EXAMPLE 4

Test on Curative Effect Against Tomato Late Blight

Tomato (cultivar: Ponderosa) was cultivated in a polyethylene pot having a diameter of 7.5 cm, and when it reached four-leaf stage, the tomato was sprayed and inoculated with a suspension of zoosporangium of tomato Late Blight and kept in a humidified chamber at 20°C for 4 hours. Then, after drying the crop plant, a drug solution having the respective test compounds adjusted to the predetermined concentrations, was applied in a sufficient amount (20 ml) by means of a spray gun. After the sprayed solution dried, it was kept in a thermostatic chamber at 20°C for 3 days, whereupon the disease severity index of each leaf was investigated by the following standards, and the disease severity was obtained by the following formula. The results are shown in Tables 7 and 8.

The disease severity in non-treated area was obtained in the same manner as in the treated area except that instead of the drug solution, water was applied by means of a spray gun.

Disease severity index 0: No lesion is observed.
Disease severity index 1: The lesion area is less than 10% of the leaf area.
Disease severity index 2: The lesion area is from 10% to less than 25% of the leaf area.

Disease severity index 3: The lesion area is from 25% to less than 50% of the leaf area.
Disease severity index 4: The lesion area is at least 50% of the leaf area.

$$\text{Disease severity} = [(0\times A+1\times B+2\times C+3\times D+4\times E)/\{4\times(A+B+C+D+E)\}]\times 100$$

where A is the number of leaves with disease severity index 0, B is the number of leaves with disease severity index 1, C is the number of leaves with disease severity index 2, D is the number of leaves with disease severity index 3, and E is the number of leaves with disease severity index 4.

Further, a theoretical value can be calculated by the Colby formula. If the experimental value is lower than the theoretical value by the Colby formula, the fungicidal composition for agricultural or horticultural use of the present invention has a synergistic effect for controlling the plant disease. In such a context, the theoretical values by the Colby formula are also shown in brackets ( ) in Tables 7 and 8.

TABLE 7

| Benalaxyl-M \ Compound No. 1 | Disease severity in the test on preventive effect against tomato late blight (theoretical value) | | |
|---|---|---|---|
| | 400 ppm | 50 ppm | 0 ppm |
| 200 ppm | 0 (71) | 0 (75) | 75 |
| 50 ppm | 6 (88) | 62 (94) | 94 |
| 0 ppm | 94 | 100 | 100 |

TABLE 8

| Flumorph \ Compound No. 1 | Disease severity in the test on preventive effect against tomato late blight (theoretical value) | | |
|---|---|---|---|
| | 400 ppm | 50 ppm | 0 ppm |
| 200 ppm | 0 (35) | 31 (37) | 37 |
| 50 ppm | 12 (94) | 37 (100) | 100 |
| 0 ppm | 94 | 100 | 100 |

TEST EXAMPLE 5

Test on Preventive Effect Against Grape Downy Mildew

(Leaf disks test)

Leaf disks having a diameter of 1 cm were punched out with leaf puncher from leaves of grapes (cultivar: Neomuscat), and a drug solution having the respective test compounds adjusted to the predetermined concentrations (applied amount: 500L/ha), was applied to the leaf disks by means of an indoor spray equipment. After the applied solution dried, the leaf disks were transferred to petri dishes having a diameter of 3 cm, a suspension of zoosporangium of Grape Downy Mildew was dropwise applied, and the leaf disks were inoculated. They were kept in a chamber at 20°C for 10 days. Then, the disease severity index of each disk was investigated by the following standards, and the disease severity was obtained by the following formula. The results are shown in Tables 9 and 10.

The disease severity in non-treated area was obtained in the same manner as in the treated area except that instead of the drug solution, water was applied by means of an auto sprayer.

Disease outbreak index 0: No sporogenesis is observed.
Disease severity index 1: The sporogenesis area is less than 10% of the drop area.
Disease severity index 2: The sporogenesis area is from 10% to less than 50% of the drop area.
Disease severity index 3: The sporogenesis area is from 50% to less than 90% of the drop area.
Disease severity index 4: The sporogenesis area is at least 90% of the drop area.

$$\text{Disease severity} = [(0\times A+1\times B+2\times C+3\times D+4\times E)/\{4\times(A+B+C+D+E)\}]\times 100$$

where A is the number of disks with disease severity index 0, B is the number of disks with disease severity index 1, C is the number of disks with disease severity index 2, D is the number of disks with disease severity index 3, and E is the number of disks with disease severity index 4.

Further, a theoretical value can be calculated by the Colby formula. If the experimental value is lower than the theoretical value by the Colby formula, the fungicidal composition for agricultural or horticultural use of the present invention has a synergistic effect for controlling the plant disease. In this context, the theoretical values by the Colby formula are also shown in brackets ( ) in Tables 9 and 10.

TABLE 9

| Benalaxyl-M \ Compound No. 1 | Disease severity in the test on preventive effect against grape downy mildew (theoretical value) | | |
|---|---|---|---|
| | 0.39 ppm | 0.098 ppm | 0 ppm |
| 0.024 ppm | 0 (40) | 80 (100) | 100 |
| 0 ppm | 40 | 100 | 100 |

TABLE 10

| Flumorph \ Compound No. 1 | Disease severity in the test on preventive effect against grape downy mildew (theoretical value) | | |
|---|---|---|---|
| | 0.39 ppm | 0.098 ppm | 0 ppm |
| 1.6 ppm | 0 (16) | 10 (40) | 40 |
| 0 ppm | 40 | 100 | 100 |

Now, Formulation Examples of the composition of the pesticide of the present invention will be described below. However, the present invention is by no means restricted to the following Examples.

FORMULATION EXAMPLE 1

A mixture of 78 parts by weight of (a) kaolin, 2 parts by weight of (b) condensate of β-naphthalenesulfonic acid sodium salt with formalin, 5 parts by weight of (c) polyoxyethylene alkylaryl sulfate and 15 parts by weight of (d) hydrated amorphous silicon dioxide, the compound of No.1 and Flumorph are mixed in a weight ratio of 8:1:1 to obtain a wettable powder.

FORMULATION EXAMPLE 2

An appropriate amount of water for granulation is added to a mixture of 10.5 parts by weight of (a) the compound No.1, 0.5 part by weight of (b) Flumorph, 20 parts by weight of (c) bentonite, 74 parts by weight of (d) kaolin and 5 parts by weight of (e) sodium lignin sulfonate, and the mixture is granulated to obtain granules.

INDUSTRIAL APPLICABILITY

The fungicidal composition for agricultural or horticultural use of the present invention has stable and high controlling effects against crop plants infected with plant diseases, and it is possible to use fungicide for agricultural or horticultural use.

The entire disclosure of Japanese Patent Application No. 2005-336705 filed on November 22, 2005 including specification, claims and summary is incorporated herein by reference in its entirety.

## Claims

1. A fungicidal composition for agricultural or horticultural use comprising, as active ingredients, (a) at least one imidazole compound represented by the formula (I):

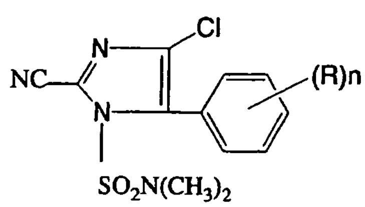

(wherein R is a $C_{1-6}$ alkyl group or a $C_{1-6}$ alkoxy group, and n is an integer of from 1 to 5) and (b) at least one more

fungicide selected from the group consisting of Flumorph and Benalaxyl-M.

**2.** The fungicidal composition for agricultural or horticultural use according to Claim 1, wherein the mixing weight ratio (a:b) of (a) the imidazole compound to (b) the fungicide is from 1:150,000 to 1,000:1.

**3.** The fungicidal composition for agricultural or horticultural use according to Claim 1, wherein the mixing weight ratio (a:b) of (a) the imidazole compound to (b) the fungicide is from 1:10,000 to 1,000:1.

**4.** The fungicidal composition for agricultural or horticultural use according to Claim 1, wherein the mixing weight ratio (a:b) of (a) the imidazole compound to (b) the fungicide is from 1:200 to 200:1.

**5.** The fungicidal composition for agricultural or horticultural use according to Claim 1, wherein the mixing weight ratio (a:b) of (a) the imidazole compound to (b) the fungicide is from 1:150 to 20:1.

**6.** The fungicidal composition for agricultural or horticultural use according to Claim 1, wherein at least one pesticide selected from the group consisting of a fungicide, an insecticide, a miticide, a nematicide, a soil pesticide, an antivirus agent, an attractant, a herbicide and a plant growth regulating agent is further incorporated.

**7.** The fungicidal composition for agricultural or horticultural use according to any one of Claims 1 to 5, wherein (a) the imidazole compound is 4-chloro-2-cyano-1-dimethylsulfamoyl-5-(4-methylphenyl) imidazole, 4-chloro-2-cyano-1-dimethylsulfamoyl-5-(4-methoxylphenyl) imidazole, 4-chloro-2-cyano-1-dimethylsulfamoyl-5-(4-ethylphenyl) imidazole or 4-chloro-2-cyano-1-dimethylsulfamoyl-5-(3-methyl-4-methoxyphenyl) imidazole.

**8.** A method for controlling plant diseases, which comprises applying the fungicidal composition for agricultural or horticultural use as defined in any one of Claims 1 to 7 to plants.

**9.** The method for controlling plant diseases according to Claim 8, wherein in a case of a foliage treatment, the compound (a) represented by the formula (I) is at a concentration of from 0.01 to 1,000 ppm, and the fungicide (b) is at a concentration of from 0.1 to 10,000 ppm.

**INTERNATIONAL SEARCH REPORT**

International application No.
PCT/JP2006/323025

A. CLASSIFICATION OF SUBJECT MATTER
*A01N43/56*(2006.01)i, *A01N37/44*(2006.01)i, *A01N43/84*(2006.01)i, *A01P3/00* (2006.01)i

According to International Patent Classification (IPC) or to both national classification and IPC

B. FIELDS SEARCHED

Minimum documentation searched (classification system followed by classification symbols)
A01N43/56, A01N37/44, A01N43/84, A01P3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 11-124305 A (Ishihara Sangyo Kaisha, Ltd.), 11 May, 1999 (11.05.99), Tables 7, 8, 11, 12 & US 2002/142021 A1 & EP 979034 A1 & WO 1998/048628 A1 | 1-9 |
| Y | US 6020332 A (Shenyang Research Institute of Chemical Industry), 01 February, 2000 (01.02.00), Tables 7, 8 (Family: none) | 1-9 |
| Y | JP 2002-201102 A (Ishihara Sangyo Kaisha, Ltd.), 16 July, 2002 (16.07.02), Par. No. [0087] & US 2004/24026 A1 & EP 1328154 A1 & WO 2002/34050 A1 | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 January, 2007 (16.01.07) | 23 January, 2007 (23.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 298196 A
- US 6020332 A
- EP 705823 A
- JP 2005336705 A


### Non-patent literature cited in the description


- The Pesticide Manual. BRITISH CROP PROTECTION COUNCIL, 462-463
- *AG CHEM NEW COMPOUND REVIEW,* 2004, vol. 22, 61
- *Shibuya Index,* 2005, 116